(19) Europäisches Patentamt
European Patent Office
Office européen des brevets

(11) **EP 2 636 769 A2**

(12) **EUROPEAN PATENT APPLICATION**

(43) Date of publication:
**11.09.2013 Bulletin 2013/37**

(51) Int Cl.:
***C25D 5/12*** (2006.01)     ***C25D 5/50*** (2006.01)
***C25D 7/10*** (2006.01)

(21) Application number: **13001120.8**

(22) Date of filing: **06.03.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **07.03.2012 JP 2012050341**

(71) Applicant: **Kabushiki Kaisha Kobe Seiko Sho
(Kobe Steel, Ltd.)
Kobe-shi,
Hyogo 651-8585 (JP)**

(72) Inventors:
• **Tsuru, Masahiro**
  **Shimonoseki-shi, Yamaguchi, 752-0953 (JP)**
• **Ozaki, Ryoichi**
  **Shimonoseki-shi, Yamaguchi, 752-0953 (JP)**
• **Taira, Koichi**
  **Shimonoseki-shi, Yamaguchi, 752-0953 (JP)**

(74) Representative: **Müller-Boré & Partner
Patentanwälte
Grafinger Straße 2
81671 München (DE)**

(54) **A copper alloy sheet with Sn coating layer for a fitting type connection terminal and a fitting type connection terminal**

(57)     A copper alloy sheet with a Sn coating layer comprises a base material made of Cu-Ni-Si system copper alloy. Formed on the base material is a Ni coating layer having an average thickness of 0.1 to 0.8 $\mu$m. Formed on the Ni coating layer is a Cu-Sn alloy coating layer having an average thickness of 0.4 to 1.0 $\mu$m. Formed on the Cu-Sn alloy coating layer is an Sn coating layer having average thickness of 0.1 to 0.8 $\mu$m. A material surface is subject to reflow treatment and has arithmetic mean roughness Ra of 0.03 $\mu$m or more and less than 0.15 $\mu$m in both a direction parallel to the rolling direction and a direction perpendicular to the rolling direction. An exposure rate of the Cu-Sn alloy coating layer to the material surface is 10 to 50%. A fitting type connection terminal requiring low insertion force can be obtained at a low cost.

## *Fig.1*

COMPOSITION IMAGE

**Description**

This application claims priority from Japanese Patent Application No. 2012-050341, the disclosure of which is incorporated herein by reference in its entirety.

The present invention relates to a copper alloy sheet with Sn coating layer for a fitting type connection terminal and a fitting type connection terminal produced from the copper alloy sheet with the Sn coating layer.

As a connector used for connecting an electric wire for automobiles or the like, a fitting type connection terminal composed of a male terminal and a female terminal has been used. In recent years, this kind of connection terminal tends to be made compact and multipolar because of weight saving and miniaturization of parts.

Fitting of a connection terminal is performed manually and a connection terminal produced from a copper alloy sheet with Sn coating layer sheet requires high insertion force at the time of fitting if the number of poles is large. Therefore, in terms of reduction of the load on a worker, it is strongly required to reduce the insertion force of a connection terminal. At the same time, it is also required to reliably maintain the electric characteristics (low contact resistance) even after a long duration at a high temperature.

As for these requirements, various proposals have been made as described in, for example, Japanese Patent Application Laid-Open (JP A) Nos. 2004-68026, 2006-183068, 2004-339555, and 2009-135097.

JP A No. 2004-68026 proposes a copper alloy sheet with Sn coating layer obtained by forming a surface coating layer composed of a Ni coating layer, a Cu-Sn alloy coating layer, and a Sn coating layer in this order on a surface of a copper alloy sheet.

JP A No. 2006-183068 proposes a copper alloy sheet with Sn coating layer obtained by forming a surface coating layer composed of either a Cu-Sn alloy coating layer in combination with a Sn coating layer or a Ni coating layer in combination with a Cu-Sn alloy coating layer and a Sn coating layer in this order on a surface-roughened surface of a copper alloy sheet and exposing the Cu-Sn alloy coating layer to the outermost surface at a predetermined area rate.

JP A No. 2004-339555 proposes a copper alloy sheet with Sn coating layer obtained by forming a Ni or Cu under-plating layer and a Sn plating layer on a surface of a copper alloy sheet and carrying out reflow treatment to make hard regions and soft regions coexist in the surface coating layer.

JP A No. 2009-135097 proposes a copper alloy sheet with Sn coating layer obtained by forming a surface coating layer composed of a Ni coating layer, a Cu coating layer, a Cu-Sn alloy coating layer, and a Sn coating layer on a surface of a copper alloy sheet so that the Cu-Sn alloy coating layer and the Sn coating layer coexist in the surface coating layer, and so that neighboring Cu-Sn alloy particles of the Cu-Sn alloy coating layer are integrated.

Although being excellent in electric characteristics after a long duration at a high temperature, the copper alloy sheet with the Sn coating layer described in JP A No. 2004-68026 is insufficient in reducing the friction coefficient (reducing the insertion force).

On other hand, the copper alloy sheet with the Sn coating layer described in JP A No. 2006-183068 can further reduce the friction coefficient (the insertion force) since the Cu-Sn alloy coating layer is exposed to the outermost surface at a predetermined area rate. However, carrying out a step for making the surface of the copper alloy sheet base material uneven is necessary before plating, which results in increase of the cost.

Further, the copper alloy sheet with the Sn coating layer described in JP-A No. 2004-339555 requires carrying out a heat treatment step of segregating the alloy elements or forming oxides in grain boundaries of the copper alloy base material before plating. The copper alloy sheet with the Sn coating layer described in JP-A No. 2009-135097 requires special reflow and cooling conditions. Both cases result in increase of the cost in their production.

In view of the above-mentioned conventional problems on a copper alloy sheet with Sn coating layer for a fitting type connection terminal, it is an object of the present invention to provide a copper alloy sheet with Sn coating layer having a low friction coefficient and requiring low insertion force at a low cost as compared with the copper alloy sheet with Sn coating layer described in JP A No. 2006-183068.

Inventors of the present invention produced a thin sheet of a Cu-Ni-Si system copper alloy, generally known in the name of Corson alloy, by a conventional method. Using the thin sheet as a base material; the inventors obtained a copper alloy sheet with Sn coating layer having a surface coating layer composed of a Ni coating layer, a Cu-Sn alloy coating layer, and a Sn coating layer by forming a Ni plating layer, a Cu plating layer, and a Sn plating layer in this order on the base material surface and thereafter carrying out reflow treatment as the invention described in JP A No. 2004-68026. It should be noted that, in the present invention, the respective layers before the reflow treatment are called as "plating layers" and the respective layers after the reflow treatment are called as "coating layers".

The surface roughness (arithmetic mean roughness Ra) of the Cu-Ni-Si system copper alloy as the base material is not intentionally made high as that for the copper alloy base material of JP A No. 2006-183068 but made to be a normal level. Unlike that in the invention described in JP A No. 2004-339555, no special heat treatment before plating is carried out. Unlike those in the invention described in JP-A No. 2009-135097, employed reflow treatment and subsequent cooling condition are not special and very common conditions.

However, when the inventors of the present invention observed the surface of the obtained copper alloy sheet with Sn coating layer in detail, a Cu-Sn alloy coating layer was exposed from the Sn coating layer to the outmost surface so as to extend along the rolling direction. The inventors of the present invention have confirmed that this exposure state is stably developed in the case of using a common Cu-Ni-Si system copper alloy sheet as a base material, forming respective plating layers of Ni, Cu, and Sn in this order on a surface of the base material, and carrying out reflow treatment.

Further, the inventors of the present invention have measured the friction coefficient of this copper alloy sheet with Sn coating layer and have found that the friction coefficient was apparently smaller particularly in the perpendicular direction to the rolling direction than that of a conventional copper alloy sheet with Sn coating layer having a surface entirely coated with the Sn coating layer and that the friction coefficient was approximately an intermediate value between those of the inventions described in JP-A No. 2004-68026 and JP-A No. 2006-183068.

The present invention has been achieved based on these findings by the inventors of the present invention.

A copper alloy sheet with Sn coating layer for a fitting type connection terminal of the present invention comprises a base material made of Cu-Ni-Si system copper alloy, a Ni coating layer formed on the base material and having an average thickness of 0.1 to 0.8 $\mu$m, a Cu-Sn alloy coating layer formed on the Ni coating layer and having an average thickness of 0.4 to 1.0 $\mu$m, and an Sn coating layer formed on the Cu-Sn alloy coating layer and having an average thickness of 0.1 to 0.8 $\mu$m. A material surface is subject to reflow treatment and has arithmetic mean roughness Ra of 0.03 $\mu$m or more and less than 0.15 $\mu$m in both a direction parallel to a rolling direction and a direction perpendicular to the rolling direction. An exposure rate of the Cu-Sn alloy coating layer to the material surface is 10 to 50%.

The above-mentioned copper alloy sheet with Sn coating layer for a fitting type connection terminal has the following desirable embodiments.

(1) The Cu-Sn alloy coating layer is exposed the material surface so as to linearly extend in the direction parallel to the rolling direction.

(2) In the embodiment of (1), the surface of the base material is buffed along the direction parallel to the rolling direction.

(3) Arithmetic mean roughness Ra of the surface of the base material in the direction parallel to the rolling direction is 0.05 $\mu$m or more and less than 0.20 $\mu$m and arithmetic mean roughness Ra in the direction perpendicular to the rolling direction is 0.07 $\mu$m or more and less than 0.20 $\mu$m.

Since the Cu-Sn alloy coating layer is exposed to the outermost surface of the surface coating layer at a predetermined area rate, the copper alloy sheet with Sn coating layer of the present invention has a low friction coefficient as compared with that in the case where the Sn coating layer covers the entire surface of the surface coating layer. Therefore, using this copper alloy sheet with Sn coating layer is used for one or both of a male terminal and a female terminal of a fitting type connection terminal can reduce the insertion force at the time of fitting.

The copper alloy sheet with Sn coating layer of the present invention is also excellent in corrosion resistance and bending processability as well as the electric characteristics (low contact resistance) after a long duration at a high temperature.

The copper alloy sheet with Sn coating layer of the present invention can be produced by using a common Cu-Ni-Si system copper alloy sheet as a base material, carrying out Ni plating, Cu plating, and Sn plating in this order, and subsequently carrying out reflow treatment. An alloy sheet having a common surface roughness may be used as the Cu-Ni-Si system copper alloy sheet with no need of special heat treatment or the like before the plating, and further a common reflow treatment and a common cooling condition are applicable. Consequently, the copper alloy sheet with Sn coating layer of the present invention can be produced at a low production cost as compared with that of the copper alloy sheet with Sn coating layer described in JP-A No. 2006-183068.

Fig. 1 is a SEM composition image of a surface of a sample material of Embodiment No. 3;

Fig. 2 is a binarized composition image of the sample material; and

Fig. 3 is a conceptual illustration of a friction coefficient measurement apparatus.

In the following, a copper alloy sheet with Sn coating layer of the present invention are described more concretely.

[Cu-Ni-Si system copper alloy sheet] (Copper alloy composition)

As a base material of a copper alloy sheet with Sn coating layer of the present invention, a Cu-Ni-Si system copper alloy sheet generally known in the name of Corson alloy is used. A desirable composition is Ni: 1 to 4% by mass; Si: 0.2 to 0.9% by mass, and the balance consisting of Cu and inevitable impurities. If necessary, the composition may further contain any one or more of Sn: 3% by mass or less, Mg: 0.5% by mass or less, Zn: 2.0% by mass or less, Mn: 0.5% by mass or less, Cr: 0.3% by mass or less, Zr: 0.1% by mass or less, P: 0.1% by mass or less; Fe: 0.3% by mass or less; and Co: 1.5% by mass or less. The composition itself is known well and there are many compositions practically used as a fitting type connection terminal, for example, C64725 (Cu-2%Ni-0.5%Si-1%Zn-0.5%Sn), C64760 (Cu-1.8% Ni-0.4% Si-1.1% Zn-0.1% Sn), C64785 (Cu-3.2% Ni-0.7% Si-0.5% Sn-1% Zn), C70250 (Cu-3.0% Ni-0.65% Si-0.15% Mg), and C70350 (Cu-1.5% N-1.1% Co-0.6% Si) that are standardized by ASTM.

The above-mentioned composition will be briefly described in the following.

Ni and Si are elements which improve the strength by forming a precipitate of $Ni_2Si$. The Ni content is 1 to 4% by mass and the Si content is desirably in the range of 0.2 to 0.9% by mass so as to give a Ni/Si mass ratio of 3.5 to 5.5 corresponding to the Ni content. If the Ni content is less than 1% by mass or the Si content is less than 0.2% by mass, the strength becomes insufficient. If the Ni content exceeds 4% by mass or the Si content exceeds 0.9% by mass, Ni or Si is crystallized or precipitated at the time of casting to lower the hot workability. In the case where the Ni/Si mass ratio is less than 3.5 or exceeds 5.5, the excess Ni or Si forms a solid solution to lower conductivity. The Ni content is preferably 1.7 to 3.9% by mass. The Ni/Si mass ratio is preferably 4.0 to 5.0.

Sn improves the strength characteristic and anti-stress relief characteristic by forming a solid solution in the structure, but if its content exceeds 3% by mass, the conductivity and bending processability are deteriorated. Consequently, in the case where Sn is added, the content is adjusted to 3% by mass or less and preferably 2.0% by mass or less.

Mg improves the strength characteristic by forming a solid solution in the structure, but if its content exceeds 0.5% by mass, the bending processability and conductivity are deteriorated. Consequently, in the case where Mg is added, the content is adjusted to 0.5% by mass or less and preferably 0.3% by mass or less.

Cr improves the hot workability, but if its content exceeds 0.3% by mass, a precipitate is produced to lower the bending processability. Consequently, in the case where Cr is added, the content is adjusted to 0.3% by mass or less and preferably 0.1% by mass or less.

Mn improves the hot workability, but if its content exceeds 0.5% by mass, the conductivity is reduced. Consequently, in the case where Mn is added, the content is adjusted to 0.5% by mass or less and preferably 0.3% by mass or less.

Zn improves the peeling resistance of the Sn plating, but if its content exceeds 2.0% by mass, the bending processability and conductivity are deteriorated. Consequently, in the case where Zn is added, the content is adjusted to 2.0% by mass or less and preferably 1.5% by mass or less.

Zr and Fe have an action of refining crystal grains, but if their contents exceed 0.1% by mass and 0.3% by mass, respectively, the bending processability is deteriorated. Consequently, in the case where Zr and Fe are added, the contents are adjusted to 0.1% by mass or less and 0.3% by mass or less, respectively, and preferably 0.05% by mass or less and 0.1% by mass or less, respectively.

P is an element which contributes mainly to the improvement of soundness (deacidification and molten metal flow) for an ingot. Consequently, in the case of improving the soundness for an ingot, P is added. If P is added in a content of 0.1 % or more, a Ni-P intermetallic compound is easily precipitated, agglomerated, and coarsened to cause cracking at the time of hot working and lowering of the workability. Consequently, in the case where P is added, the content is adjusted to 0.1% by mass or less and preferably 0.03% by mass or less.

Co is an element for producing a Ni-Co-Si type precipitate to further improve the strength of the copper alloy. However, if the content of Co exceeds 1.5% by mass, the precipitation amount of the compound in an ingot is increased and it tends to cause cracking of an ingot, heat cracking at the time of hot rolling, and heat stretching cracking. Consequently, the Co content is adjusted to 1.5% by mass or less. In the case where Co is added, the Co content is preferably 0.05% by mass or more. It is preferable that the composition is determined so as to adjust the total content of Ni and Co to 1 to 4% by mass and the (Ni + Co) / Si mass ratio to 3.5 to 5.5 and preferably 4.0 to 5.0.

(Method for producing copper alloy sheet)

A Cu-Ni-Si system copper alloy sheet according to the present invention can be produced according to a conventional method by carrying out steps of melting/ casting, soaking, hot rolling, quenching after hot rolling, cold rolling, recrystallizing accompanied with solubilization, cold rolling, and aging. In the cold rolling, unlike the invention described in JP-A No. 2006-183068, there is no need to use surface-roughened work rolls and rolls with normal surface roughness may be used. In order to increase the strength, if necessary, steps of recrystallizing accompanied with solubilization, aging, and cold rolling may be selected. Further, in order to obtain a good spring property, low temperature annealing may be carried out at the last.

Since a Cu-Ni-Si system copper alloy contains a relatively large amount of Si and a stiff oxide film containing Si oxide is formed on the surface, a grinding step for removing an oxide film on the surface is carried out after the recrystallization treatment, aging treatment, and low temperature annealing. A rotating buff is preferably used for this grinding step and is commonly used. A rotating buff is arranged in a manner that its rotary shaft is perpendicular to the rolling direction and the buff is pushed against the surface of the Cu-Ni-Si system copper alloy sheet which is continuously moved in the longitudinal direction.

The Cu-Ni-Si system copper alloy sheet obtained by the above-mentioned method is not at all different from a common Cu-Ni-Si system copper alloy sheet. Similarly, regarding the surface roughness, the arithmetic mean roughness Ra in the direction parallel to the rolling direction is 0.05 $\mu$m or more and less than 0.20 $\mu$m and more generally 0.07 $\mu$m or more and 0.15 $\mu$m or less and the arithmetic mean roughness Ra in the direction perpendicular to the rolling direction is 0.07 $\mu$m or more and less than 0.20 $\mu$m and more generally 0.10 $\mu$m or more and 0.17 $\mu$m or less.

[Ni, Cu, and Sn plating layers]

Ni plating, Cu plating, and Sn plating are carried out in this order on the surface of the Cu-Ni-Si system copper alloy sheet produced by the above-mentioned steps and subsequently, reflow treatment is carried out.

Since the average thickness of the Ni plating layer is not changed even after reflow treatment, the Ni plating layer may be formed to have an average thickness in the range of 0.1 to 0.8 $\mu$m. The Cu plating layer and the Sn plating layer may be formed to respectively have a proper average thickness in a manner that the Cu plating layer disappears after the reflow treatment, the Cu-Sn alloy coating layer with an average thickness of 0.4 to 1.0 $\mu$m is formed and the Sn coating layer with an average thickness of 0.1 to 0.8 $\mu$m remains. Plating baths and plating conditions for the Ni plating, Cu plating, and Sn plating may be those as described in JP-A No. 2004-68026.

The reflow treatment condition may be the Sn melting temperature to 600°C for 3 to 30 seconds, preferably 400 to 600°C for 3 to 7 seconds. The cooling subsequent to the reflow treatment is water cooling. This is common as the reflow treatment condition and the cooling condition after the reflow treatment.

[Surface coating layer after reflow treatment]

(Ni coating layer)

The Ni layer in the surface coating layer is effective for suppressing diffusion of Cu of the base material in the Sn coating layer under a high temperature environment. However, if the average thickness of the Ni coating layer is less than 0.1 $\mu$m, the diffusion suppression effect is slight and Cu oxide is formed in the surface of the Sn coating layer to increase the contact resistance. On the other hand, if the average thickness of the Ni coating layer exceeds 0.8 $\mu$m, cracks are formed by bending and the processability of forming a connection terminal is reduced. Consequently, the average thickness of the Ni coating layer is adjusted to 0.1 to 0.8 $\mu$m and preferably 0.1 to 0.6 $\mu$m.

(Cu-Sn alloy coating layer)

Since the Cu-Sn alloy coating layer in the surface coating layer is hard, exposure of this coating layer to the surface and existence under the Sn coating layer increase the hardness of the surface and are effective for reducing the insertion force at the time of terminal insertion. Further, the Cu-Sn alloy coating layer is effective for suppressing diffusion of Ni of the Ni coating layer in the Sn coating layer. However, if the average thickness of the Cu-Sn alloy coating layer is less than 0.4 $\mu$m, diffusion of Ni in a high temperature environment cannot be suppressed and diffusion of Ni in the surface of the Sn coating layer is promoted. Accordingly, the Ni coating layer is broken and Cu of the base material is diffused in the surface of Sn coating layer through the broken Ni coating layer to increase the contact resistance, and the interface between the base material and the surface coating layer becomes brittle to cause separation of the surface coating layer. On the other hand, if the average thickness of the Cu-Sn alloy coating layer exceeds 1.0 $\mu$m, cracks are formed by bending and the processability of forming a connection terminal is reduced. Consequently, the average thickness of the Cu-Sn alloy coating layer is adjusted to 0.4 to 1.0 $\mu$m and preferably 0.4 to 0.8 $\mu$m.

(Sn coating layer)

If the Sn coating layer becomes thick, the insertion force is increased and therefore, the average thickness of the Sn coating layer is preferably 0.8 $\mu$m or less. On the other hand, if the average thickness of the Sn coating layer is less than 0.1 $\mu$m, the Cu oxide amount in the material surface due to heat diffusion such as high temperature oxidation is increased and thus the contact resistance tends to be increased and the corrosion resistance is deteriorated. Consequently, the average thickness of the Sn coating layer is adjusted to 0.1 to 0.8 $\mu$m.

(Exposure rate of Cu-Sn alloy coating layer to material surface)

If reflow treatment is carried out on a copper alloy sheet as a base material after being subjected to the surface plating with Ni, Cu, and Sn in this order according to the invention described in JP A No. 2004-68026, the surface coating layer composed of the Ni coating layer, the Cu-Sn alloy coating layer, and the Sn coating layer is formed on the surface of the base material. It is generally supposed that the Sn coating layer covers the entire surface of the surface coating layer and thus the Cu-Sn alloy coating layer is not exposed to the material surface in the case where the surface roughness of the base material is a normal value (unlike that of the invention described in JP A No. 2006-183068, the surface roughness is not made intentionally large).

However, in the case where a Cu-Ni-Si system copper alloy sheet is used as a base material, even if the surface roughness of the base material is a normal value, the Cu-Sn alloy coating layer may be exposed to the material surface and still more, in the case where the Cu-Sn alloy coating layer is exposed, the layer is exposed so as to linearly extend in the rolling direction. The reason for occurrence of such a phenomenon has not been made clear, but the inventors of the present invention presume that the fine unevenness (traces by rolling and ground traces by buffing) formed on the surface of the sheet or an oxide film mainly containing Si oxide remaining unevenly without being removed by the buffing results in increase of the production amount and growing speed of the Cu-Sn alloy at the time of reflow treatment or local decrease of the barrier effect of the Ni plating layer and as a result, the Cu-Sn alloy coating layer formation is locally promoted and the layer is exposed linearly to the material surface, since the Cu-Sn alloy coating layer is exposed linearly along the rolling direction.

The exposure rate of the Cu-Sn alloy coating layer to the material surface is the area rate of the Cu-Sn alloy coating layer exposed to the material surface per unit surface area represented by percentage, and it is adjusted to 10 to 50% in the present invention. The Sn coating layer remains in the remaining 50 to 90% of the material surface. If the exposure rate of the Cu-Sn alloy coating layer to the material surface is less than 10%, decrease of the friction coefficient is insufficient so that the effect of decreasing the insertion force of a terminal cannot be caused sufficiently. On the other hand, if the exposure rate of the Cu-Sn alloy coating layer to the material surface exceeds 50%, the Cu oxide amount in the material surface due to time passage or corrosion is increased and it tends to increase the contact resistance and make it difficult to keep the electric characteristics (low contact resistance) after a long duration at a high temperature.

The exposure rate of the Cu-Sn alloy coating layer to the material surface is higher as the average thickness of the Sn coating layer is smaller and is lower as it is larger. For keeping the exposure rate within the range of 10 to 50%, the average thickness of the Sn coating layer is preferably in the range of 0.1 to 0.8 $\mu$m.

(Maximum width of Sn coating layer in direction perpendicular to rolling direction)

In consideration of the size of a contact part of a recent miniaturized connection terminal, if the width of the Sn coating layer observed on the material surface is 200 $\mu$m or more in the direction perpendicular to the rolling direction, the effect of decreasing the insertion force is difficult to be obtained. Consequently, in the copper alloy sheet with Sn coating layer of the present invention, the maximum width of the Sn coating layer in the direction perpendicular to the rolling direction is preferably 200 $\mu$m or less. The maximum width of the Sn coating layer in the direction perpendicular to the rolling direction is larger as the average thickness of the Sn coating layer is smaller and smaller as it is thicker. For keeping the maximum width of 200 $\mu$m or less, the average thickness of the Sn coating layer is preferably in the range of 0.1 to 0.8 $\mu$m.

(Arithmetic mean roughness Ra of material surface)

In the case where the copper alloy sheet with Sn coating layer of the present invention is produced by carrying out Ni plating, Cu plating, and Sn plating in this order on the above-mentioned Cu-Ni-Si system copper alloy sheet as a base material, and subsequently carrying out reflow treatment for forming the above-mentioned Ni coating layer, Cu-Sn alloy coating layer, and Sn coating layer on the surface of the base material, the surface roughness of the material surface is adjusted to keep the arithmetic mean roughness Ra approximately within the range of 0.03 $\mu$m or more and less than 0.15 $\mu$m in both a direction parallel to the rolling direction and a direction perpendicular to the rolling direction. The surface roughness is almost same as the surface roughness of the copper alloy sheet with Sn coating layer obtained in the case of applying the invention described in JP A No. 2004-68026 to a copper alloy sheet other than a Cu-Ni-Si system copper alloy sheet.

[Fitting type connection terminal]

Because of exposure of the Cu-Sn alloy coating layer linearly in the direction parallel to the rolling direction, the copper alloy sheet with Sn coating layer of the present invention has lower friction coefficient measured in the direction perpendicular to the rolling direction than that measured in the direction parallel to the rolling direction. Consequently, the fitting type connection terminal is preferably press-punched and formed in a manner that the insertion direction is the direction perpendicular to the rolling direction of the copper alloy sheet with Sn coating layer.

[Embodiment 1]

A Cu-Ni-Si system copper alloy sheet with a thickness of 0.25 mm was produced by carrying out steps of melting/ casting, soaking, hot rolling, quenching after hot rolling, cold rolling, recrystallizing accompanied with solubilization, cold rolling, and aging for a Cu-Ni-Si system copper alloy containing Ni: 1.8% by mass, Si: 0.4% by mass, Zn: 1.0% by mass, Sn: 0.2% by mass, Mn: 0.05% by mass, Mg: 0.04% by mass, and the balance consisting of Cu and inevitable impurities. After the recrystallization treatment accompanied with solubilization and aging treatment, grinding by a rotating buff was carried out. The rotating buff was arranged in a manner that the rotary shaft was perpendicular to the rolling direction and the buff was pushed against the surface of the copper alloy sheet moving continuously in the longitudinal direction.

The surface roughness of the produced Cu-Ni-Si system copper alloy sheet (base material) was measured as follows. The material of the rotating buff, the number of abrasive grain, and the rotating speed of the rotating buff were changed to adjust the surface roughness (Ra) of copper alloy sheets (base materials) of Nos. 1 to 13.

[Measurement of surface roughness of copper alloy sheet]

The surface roughness of each copper alloy sheet was measured by a contact type surface roughness measurement meter (Surfcom 1400, manufactured by Tokyo Seimitsu Co., Ltd.) according to JIS B0601-1994. The surface roughness measurement condition was a cutoff value of 0.8 mm; a standard length of 0.8 mm; an evaluation length of 4.0 mm; a measurement speed of 0.3 mm/s; and a stylus tip radius of 5 $\mu$m R. The surface roughness measurement direction was the direction parallel to the rolling direction (//) and the direction perpendicular to the rolling direction ($\perp$).

Then, Ni plating, Cu plating, and Sn plating were carried out in this order for the surface of each copper alloy sheet under the following conditions and subsequently reflow treatment was carried out to give sample materials (copper alloy sheets with Sn coating layer) of Nos. 1 to 13 as shown in Table 1. Ni plating was omitted for No. 13.

Ni plating was carried out by using a plating bath containing 240 g/L of $NiSO_4/6H_2O$, 30 g/L of $NiCl_2/6H_2O$, and 30 g/L of $H_3BO_4$ under the condition of a bath temperature of 45°C and a current density of 5 Adm$^2$.

Cu plating was carried out by using a plating bath containing 250 g/L of $CuSO_4$, 80 g/L of $H_2SO_4$, and 10 g/L of a brightener under the condition of a bath temperature of 30°C and a current density of 5 Adm$^2$.

Sn plating was carried out by using a plating bath containing 50 g/L of $SnSO_4$, 80 g/L of $H_2SO_4$, 30 g/L of cresolsulfonic acid, and 10 g/L of a brightener under the condition of a bath temperature of 15°C and a current density of 3 Adm$^2$.

The reflow treatment was carried out under the condition of 450°C $\times$ 12 seconds and water cooling was carried out immediately.

The surface roughness of each sample material, the exposure rate of the Cu-Sn alloy coating layer to the material surface, and the average thickness of each coating layer were measured as follows. Further, measurement of dynamic friction coefficient, measurement of contact resistance after leaving at a high temperature, a corrosion resistance test, and a bending processability test were carried out for each sample material as follows. The results are shown in Table 1.

[Measurement of surface roughness of copper alloy sheet with Sn coating layer]

The surface roughness of the copper alloy sheet with Sn coating layer was measured by the method described in the [Measurement of surface roughness of copper alloy sheet] by measuring the arithmetic mean roughness Ra in the direction parallel to the rolling direction (//) and the direction perpendicular to the rolling direction ($\perp$).

[Measurement of exposure rate of material of Cu-Sn alloy coating layer to material surface]

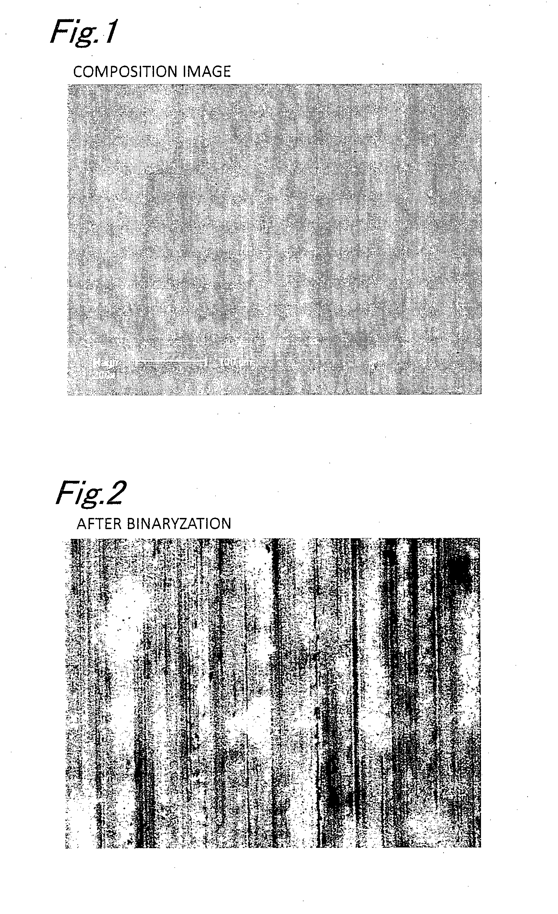

The surface of each sample material was observed by a SEM (scanning electric microscope) and surface composition images (x200) obtained at arbitrary 3 viewing fields were binarized. Then, the average value of the exposure rate of the Cu-Sn alloy coating layer to the material surface in the 3 viewing fields was measured by image analysis. Simultaneously, the maximum width of the Sn coating layer in the direction perpendicular to the rolling direction was measured from the binarized composition images. Fig. 1 shows the surface composition image of the sample material of No. 3 and Fig. 2 shows the composition image after the binarization of No.3. In Figs. 1 and 2, the vertical direction is the direction parallel to the rolling direction and the Cu-Sn alloy coating layer (portions look black) is exposed linearly in the direction parallel to the rolling direction. Sample materials of Nos. 1, 2 and 4 to 12 also showed linear exposure of the Cu-Sn alloy coating layer in the direction parallel to the rolling direction. Only the sample material of No. 13 did not show exposure of the Cu-Sn alloy coating layer.

[Measurement of average thickness of Sn coating layer]

Using a fluorescent X-ray film thickness meter (SFT 3200, manufactured by Seiko Instruments Inc.), the total of the thickness of the Sn coating layer and the thickness of the Sn component contained in the Cu-Sn alloy coating layer was measured. Thereafter, each sample material was immersed in an aqueous solution containing p-nitrophenol and sodium hydroxide for 10 minutes to remove the Sn coating layer. Again, the thickness of the Sn component contained in the Cu-Sn alloy coating layer was measured by using the fluorescent X-ray film thickness meter. As the measurement condition, a monolayer calibration curve of Sn/base material was used as a calibration curve and the collimator diameter $\phi$ was set at 0.5 mm. The average thickness of the Sn coating layer was calculated by subtracting the thickness of the Sn component contained in the Cu-Sn alloy coating layer from the total of the obtained thickness of the Sn coating layer and the thickness of the Sn component contained in the Cu-Sn alloy coating layer.

[Measurement of average thickness of Cu-Sn alloy coating layer]

The average thickness of Cu-Sn alloy coating layer was measured by using the fluorescent X-ray film thickness meter after each sample material was immersed in the above-mentioned peeling solution to remove the Sn coating layer.

[Measurement of average thickness of Ni coating layer]

Using a fluorescent X-ray film thickness meter (SFT 3200, manufactured by Seiko Instruments Inc.), the average thickness was measured. As the measurement condition, a bilayer calibration curve of Sn/Ni/base material was used as a calibration curve and the collimator diameter $\phi$ was set at 0.5 mm.

[Measurement of dynamic friction coefficient]

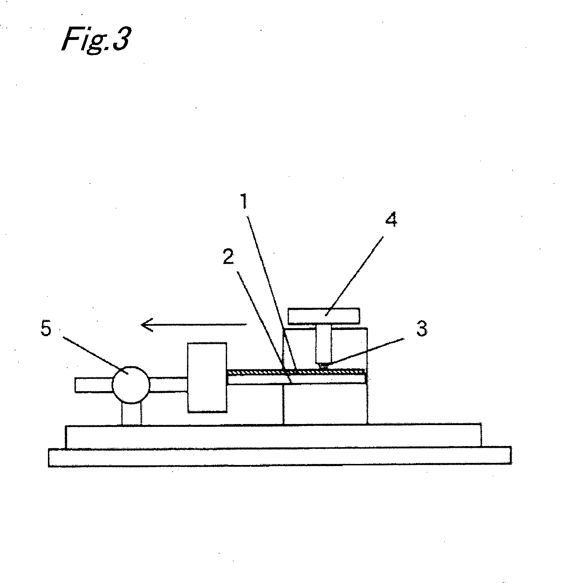

The evaluation was done by simulating the shape of an indent part of an electric contact in a fitting type connection part and using the apparatus illustrated in Fig. 3. First, a male specimen 1 of a sheet material cut out of each sample material was fixed on a horizontal stand 2 and a female specimen 3 of a spherically processed material (inner diameter $\phi$ 1.5 mm) of the sample material of No. 13 was put thereon, and both the coating layers were brought into contact with each other. Then, a load (weight 4) of 3.0 N was applied to the female specimen 3 to hold the male specimen 1 and the male specimen 1 was pulled horizontally (sliding speed was 80 mm/min) by using a transverse type load measurement apparatus (Model 2152, manufactured by Aikoh Engineering Co., Ltd.) to measure the maximum friction force F (unit: N) to the sliding distance of 5 mm. The friction coefficient was calculated according to the following formula (1). The reference number 5 shows a load cell and the arrow shows the sliding direction.
$$\text{Friction coefficient} = F/3.0 \quad (1)$$

The friction coefficient was measured for the male specimen 1 in the moving direction parallel to the rolling direction (//) and in the moving direction perpendicular to the rolling direction ($\perp$).

[Measurement of contact resistance after leaving at high temperature]

After each sample material was heated at 160°C for 120 hours in atmospheric air, the contact resistance was measured by a 4-terminal method under the condition of an open voltage of 20 mV, an electric current of 10 mA, and no-sliding.

[Evaluation of bending processability]

A specimen was cut out in a manner that the rolling direction was the longitudinal direction. Using a W bending test tool defined in JIS H3110, the specimen was subjected to bending processing at a load of $9.8 \times 103$ N in a manner that the bending line is in the direction perpendicular to the rolling direction. Thereafter, the cross sectional observation was performed. The bending processability was evaluated according to the following criteria: a case where no crack formed in the bent part after the test was propagated to the copper alloy base material was evaluated as $\bigcirc$ and a case where cracks were propagated to the copper alloy base material and cracks were formed in the copper alloy base material was evaluated as $\times$.

[Evaluation of corrosion resistance]

According to JIS Z2371, each sample material was subjected to a salt water spraying test using an aqueous 5% NaCl solution at 35°C for 6 hours. The corrosion resistance was evaluated as follows: a case where no corrosion was observed by appearance observation after the salt water spraying was evaluated as $\bigcirc$ and a case where corrosion was observed was evaluated as $\times$.

[Table 1]

| | No. | Material surface roughness Ra (µm) ⊥ | Material surface roughness Ra (µm) // | Base material surface roughness Ra (µm) ⊥ | Base material surface roughness Ra (µm) // | Surface coating layer thickness (µm) Ni | Surface coating layer thickness (µm) Cu-Sn alloy | Surface coating layer thickness (µm) Sn | Exposure rate of Cu-Sn alloy coating layer (%) | Maximum width of Sn coating layer (µm) | Dynamic friction coefficient ⊥ | Dynamic friction coefficient // | Contact resistance after leaving at high temperature (mΩ) | Corrosion resistance | Bending processability |
|---|---|---|---|---|---|---|---|---|---|---|---|---|---|---|---|
| Embodiments of Invention | 1 | 0.08 | 0.06 | 0.12 | 0.07 | 0.15 | 0.5 | 0.2 | 35 | 78 | 0.37 | 0.44 | 80 | O | O |
| | 2 | 0.07 | 0.06 | 0.13 | 0.07 | 0.6 | 0.5 | 0.2 | 33 | 83 | 0.38 | 0.45 | 70 | O | O |
| | 3 | 0.07 | 0.05 | 0.11 | 0.08 | 0.3 | 0.4 | 0.2 | 30 | 92 | 0.39 | 0.45 | 80 | O | O |
| | 4 | 0.13 | 0.09 | 0.15 | 0.09 | 0.3 | 0.8 | 0.2 | 38 | 62 | 0.36 | 0.43 | 70 | O | O |
| | 5 | 0.11 | 0.07 | 0.14 | 0.10 | 0.3 | 0.5 | 0.1 | 36 | 75 | 0.37 | 0.43 | 80 | O | O |
| | 6 | 0.05 | 0.04 | 0.14 | 0.09 | 0.3 | 0.5 | 0.6 | 15 | 180 | 0.39 | 0.45 | 75 | O | O |
| Comparative Examples | 7 | 0.07 | 0.04 | 0.11 | 0.08 | 0.05 | 0.5 | 0.2 | 34 | 81 | 0.38 | 0.43 | 120 | O | O |
| | 8 | 0.06 | 0.04 | 0.14 | 0.11 | 1.0 | 0.5 | 0.2 | 35 | 79 | 0.38 | 0.44 | 70 | O | × |
| | 9 | 0.05 | 0.03 | 0.09 | 0.06 | 0.3 | 0.3 | 0.2 | 25 | 152 | 0.40 | 0.45 | 250 | O | O |
| | 10 | 0.10 | 0.05 | 0.12 | 0.08 | 0.3 | 1.2 | 0.2 | 39 | 65 | 0.36 | 0.42 | 50 | O | × |
| | 11 | 0.16 | 0.09 | 0.21 | 0.12 | 0.3 | 0.5 | 0.05 | 60 | 49 | 0.34 | 0.41 | 150 | × | O |
| | 12 | 0.03 | 0.02 | 0.11 | 0.07 | 0.3 | 0.5 | 0.8 | 5 | 305 | 0.46 | 0.47 | 70 | O | O |
| | 13 | 0.06 | 0.05 | 0.11 | 0.08 | 0.0 | 0.4 | 0.8 | 0 | - | 0.54 | 0.56 | 120 | O | O |

EP 2 636 769 A2

Although the sample materials of Nos. 1 to 12 merely had the surface roughness (arithmetic mean roughness Ra) of the Cu-Ni-Si system copper alloy sheet as a base material in a normal level or in a slightly high level (the value of No. 11 in the direction parallel to the rolling direction), the Cu-Sn alloy coating layer was exposed at a predetermined area rate to the material surface only by carrying out reflow treatment under the normal condition after plating with Ni, Cu, and Sn.

The sample materials of Nos. 1 to 6 having the surface roughness (arithmetic mean roughness Ra) after the reflow treatment, the average thickness of the Ni coating layer, the Cu-Sn alloy coating layer, and the Sn coating layer, and the exposure rate of the Cu-Sn alloy coating layer to the material surface within the defined ranges of the present invention had considerably small dynamic friction coefficients (particularly in the direction perpendicular to the rolling direction) as compared with those of the sample material of No. 12 having the Sn coating layer covering almost entire material surface and of the sample material of No. 13 having the Sn coating layer covering the entire material surface and at the same time, the sample materials of Nos. 1 to 6 were excellent in the contact resistance after leaving at a high temperature, corrosion resistance, and bending processability.

On the other hand, both of the sample material of No. 7 with a small average thickness of the Ni coating layer and the sample material of No. 9 with a small average thickness of the Cu-Sn alloy coating layer had high contact resistance values after leaving at a high temperature. Both of the sample material of No. 8 with a large average thickness of the Ni coating layer and the sample material of No. 10 with a large average thickness of the Cu-Sn alloy coating layer were inferior in the bending processability. The sample material of No. 11 with a small average thickness of the Sn coating layer also had too high an exposure rate of the Cu-Sn alloy coating layer to the material surface and a small dynamic friction coefficient (particularly in the direction perpendicular to the rolling direction), and had high contact resistance after leaving at a high temperature and was inferior in corrosion resistance. The sample material of No. 12 with a relatively large average thickness of the Sn coating layer had too low an exposure rate of the Cu-Sn alloy coating layer to the material surface, a large dynamic friction coefficient (particularly in the direction perpendicular to the rolling direction), and a large maximum width of the Sn layer in the direction perpendicular to the rolling direction. The sample material of No. 13 having the Cu-Sn. alloy coating layer which was not exposed to the material surface had a large dynamic friction coefficient (particularly in the direction perpendicular to the rolling direction) and also had an increased contact resistance after leaving at a high temperature since it had no Ni coating layer.

[Embodiment 2]

Cu-Ni-Si system copper alloy sheets with a thickness of 0.25 mm were produced from Cu-Ni-Si system copper alloys with various compositions as shown in Nos. 14 to 21 of Table 2 by carrying out the same steps (including grinding by a rotating buff) as those of Embodiment 1. After the surface roughness of each of the produced Cu-Ni-Si system copper alloy sheets (base material) was measured by the same method as that in Embodiment 1, Ni plating, Cu plating, and Sn plating were carried out in this order under the same conditions as those in Embodiment 1 and subsequently reflow treatment was carried out to obtain sample materials (copper alloy sheets with Sn coating layer) of Nos. 14 to 21.

The surface roughness of each sample, the exposure rate of the Cu-Sn alloy coating layer to the material surface, and the average thickness of each coating layer were measured in the same manner as that in Embodiment 1. Measurement of dynamic friction coefficient, measurement of contact resistance after leaving at a high temperature, the corrosion resistance test, and the bending processability test were carried out for each sample material in the same manner as that in Embodiment 1. The results are shown in Table 3.

[Table 2]

| No. | Alloy composition (% by mass) | | | | | | | | |
| | Cu | Ni | Si | Sn | Mg | Zn | Mn | Cr | Co |
|---|---|---|---|---|---|---|---|---|---|
| 14 | Balance | 2.47 | 0.53 | - | - | - | - | - | - |
| 15 | Balance | 2.58 | 0.55 | 0.05 | - | 0.49 | - | - | - |
| 16 | Balance | 1.77 | 0.37 | 0.10 | - | 1.02 | 0.08 | - | - |
| 17 | Balance | 2.51 | 0.56 | 0.15 | 0.16 | 1.12 | - | - | - |
| 18 | Balance | 1.75 | 0.37 | - | - | - | - | - | - |
| 19 | Balance | 1.03 | 0.23 | 0.06 | 0.014 | - | - | 0.09 | - |

(continued)

| No. | Alloy composition (% by mass) | | | | | | | | |
|-----|---------|------|------|------|-------|------|------|------|------|
|     | Cu      | Ni   | Si   | Sn   | Mg    | Zn   | Mn   | Cr   | Co   |
| 20  | Balance | 3.22 | 0.72 | 1.50 | 0.005 | -    | 0.06 | -    | -    |
| 21  | Balance | 1.20 | 0.56 | 0.12 | 0.01  | 0.55 | 0.04 | 0.04 | 1.20 |

[Table 3]

| | No. | Material surface roughness Ra (μm) | | Base material surface roughness Ra (μm) | | Surface coating layer thickness (μm) | | | Exposure rate of Cu-Sn alloy coating layer (%) | Maximum width of Sn coating layer (μm) | Dynamic friction coefficient | | Contact resistance after leaving at high temperature (mΩ) | Corrosion resistance | Bending processability |
| | | ⊥ | // | ⊥ | // | Ni | Cu-Sn alloy | Sn | | | ⊥ | // | | | |
|---|---|---|---|---|---|---|---|---|---|---|---|---|---|---|---|
| Embodiments of Invention | 14 | 0.08 | 0.06 | 0.13 | 0.07 | 0.5 | 0.4 | 0.3 | 38 | 65 | 0.36 | 0.43 | 60 | ○ | ○ |
| | 15 | 0.07 | 0.06 | 0.11 | 0.05 | 0.3 | 0.5 | 0.3 | 43 | 80 | 0.35 | 0.42 | 75 | ○ | ○ |
| | 16 | 0.07 | 0.06 | 0.12 | 0.06 | 0.4 | 0.4 | 0.2 | 30 | 78 | 0.37 | 0.45 | 70 | ○ | ○ |
| | 17 | 0.10 | 0.08 | 0.14 | 0.09 | 0.3 | 0.4 | 0.2 | 39 | 63 | 0.35 | 0.42 | 80 | ○ | ○ |
| | 18 | 0.11 | 0.08 | 0.16 | 0.08 | 0.4 | 0.5 | 0.3 | 27 | 55 | 0.38 | 0.44 | 70 | ○ | ○ |
| | 19 | 0.09 | 0.06 | 0.13 | 0.08 | 0.3 | 0.5 | 0.2 | 35 | 60 | 0.36 | 0.43 | 70 | ○ | ○ |
| | 20 | 0.06 | 0.05 | 0.11 | 0.06 | 0.2 | 0.5 | 0.3 | 20 | 100 | 0.39 | 0.45 | 80 | ○ | ○ |
| | 21 | 0.10 | 0.08 | 0.16 | 0.08 | 0.3 | 0.5 | 0.3 | 46 | 75 | 0.34 | 0.43 | 80 | ○ | ○ |

As shown in Table 3, although the sample materials of Nos. 14 to 21 (copper alloy sheets with Sn coating layer) had the surface roughness (arithmetic mean roughness Ra) of the base material in a normal level, the Cu-Sn alloy coating layer was exposed at a predetermined area rate to the material surface only by carrying out reflow treatment under the normal condition after plating with Ni, Cu, and Sn. In the case of the sample materials of Nos. 14 to 21, dynamic friction coefficients as small as those of the sample materials of Nos. 1 to 6 were obtained and the sample materials were excellent in contact resistance after leaving at a high temperature, corrosion resistance, and bending processability.

**Claims**

1. A copper alloy sheet with Sn coating layer for a fitting type connection terminal, comprising:

   a base material made of Cu-Ni-Si system copper alloy;
   a Ni coating layer formed on the base material and having an average thickness of 0.1 to 0.8 $\mu$m;
   a Cu-Sn alloy coating layer formed on the Ni coating layer and having an average thickness of 0.4 to 1.0 $\mu$m; and
   an Sn coating layer formed on the Cu-Sn alloy coating layer and having an average thickness of 0.1 to 0.8 $\mu$m;
   wherein, a material surface is subject to reflow treatment and has arithmetic mean roughness Ra of 0.03 $\mu$m or more and less than 0.15 $\mu$m in both a direction parallel to a rolling direction and a direction perpendicular to the rolling direction, and
   wherein an exposure rate of the Cu-Sn alloy coating layer to the material surface is 10 to 50%.

2. The copper alloy sheet with Sn coating layer for a fitting type connection terminal according to claim 1, wherein the Cu-Sn alloy coating layer is exposed to the material surface so as to linearly extend in the direction parallel to the rolling direction.

3. The copper alloy sheet with Sn coating layer for a fitting type connection terminal according to claim 2, wherein the surface of the base material is buffed along the direction parallel to the rolling direction.

4. The copper alloy sheet with Sn coating layer for a fitting type connection terminal according to any one of claims 1 to 3, wherein a surface of the base material has arithmetic mean roughness Ra in the direction parallel to the rolling direction of 0.05 $\mu$m or more and less than 0.20 $\mu$m and arithmetic mean roughness Ra in the direction perpendicular to the rolling direction of 0.07 $\mu$m or more and less than 0.20 $\mu$m.

5. The copper alloy sheet with Sn coating layer for a fitting type connection terminal according to any one of claims 1 to 4, wherein the Cu-Ni-Si system copper alloy contains Ni: 1 to 4% by mass and Si: 0.2 to 0.9% by mass, so that a Ni/ Si mass ratio is 3.5 to 5.5, with the balance consisting of Cu and unavoidable impurities.

6. The copper alloy sheet with Sn coating layer for a fitting type connection terminal according to claim 5, wherein the Cu-Ni-Si system copper alloy further contains any one or more of Sn: 3% by mass or less, Mg: 0.5% by mass or less; Zn: 2% by mass or less; Mn: 0.5% by mass or less; Cr: 0.3% by mass or less; Zr: 0.1% by mass or less; P: 0.1% by mass or less; Fe: 0.3% by mass or less; and Co: 1.5% by mass or less.

7. The copper alloy sheet with Sn coating layer for a fitting type connection terminal according to claim 6, wherein the Cu-Ni-Si system copper alloy contains Co, and
   wherein the total amount of Ni and Co in the Cu-Ni-Si system copper alloy is 1 to 4% by mass at (Ni + Co)/Si mass ratio of 3.5 to 5.5

8. A fitting type connection terminal, comprising the copper alloy sheet with the Sn coating layer according to any one of claim 1 to 7, wherein an insertion direction is set in the direction perpendicular to the rolling direction.

*Fig.1*

COMPOSITION IMAGE

*Fig.2*

AFTER BINARYZATION

*Fig.3*

**EP 2 636 769 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012050341 A
- JP 2004068026 A
- JP 2006183068 A
- JP 2004339555 A
- JP 2009135097 A